# EUROPÄISCHE PATENTSCHRIFT

(11) **EP 1 379 534 B1**
(45) Veröffentlichungstag und Bekanntmachung des Hinweises auf die Patenterteilung: **15.12.2004**
(21) Anmeldenummer: 02745209.3
(22) Anmeldetag: 03.04.2002
(51) Int. Cl.: C07F 15/00, H05B 33/00

(54) **RHODIUM-UND IRIDIUM-KOMPLEXE**
RHODIUM AND IRIDIUM COMPLEXES
COMPLEXES DE RHODIUM ET D'IRIDIUM

(30) Priorität: 05.04.2001 DE 10116962
(43) Veröffentlichungstag der Anmeldung: 14.01.2004
(73) Patentinhaber: Covion Organic Semiconductors GmbH, 65926 Frankfurt (DE)
(72) Erfinder: STÖSSEL, Philipp, 65929 Frankfurt (DE); SPREITZER, Hubert, 68519 Viernheim (DE); BECKER, Heinrich, 61479 Glashütten (DE)
(74) Vertreter: Luderschmidt, Schüler & Partner GbR
(86) Internationale Anmeldenummer: PCT/EP2002/003704
(87) Internationale Veröffentlichungsnummer: WO 2002/081488

(56) Entgegenhaltungen:
- HONG ZHI XIE ET AL: "Reduction of Self-Quenching Effect in Organic Electrophosphorescence Emitting Devices via the Use of Sterically Hindered Spacers in Phosphorescence Molecules" ADVANCED MATERIALS, VCH VERLAGSGESELLSCHAFT, WEINHEIM, DE, Nr. 16, 2001, Seiten 1245-1248, XP002196400 ISSN: 0935-9648
- LAMANSKY S ET AL: "Synthesis and Characterization of Phosphorescent Cyclometalated Iridium Complexes" INORGANIC CHEMISTRY, AMERICAN CHEMICAL SOCIETY, EASTON, US, Bd. 40, Nr. 7, 2001, Seiten 1704-1711, XP002196399 ISSN: 0020-1669
- GRUSHIN V V ET AL: "New, efficient electroluminescent materials based on organometallic Ir complexes" CHEMICAL COMMUNICATIONS, ROYAL SOCIETY OF CHEMISTRY, GB, 2001, Seiten 1494-1495, XP002196401 ISSN: 1359-7345
- SERGEY LAMANSKY: "Molecularly doped polymer light emitting diodes utilizing phosphorescent Pt(II) and Ir(III) dopants" ORGANIC ELECTRONICS, ELSEVIER, AMSTERDAM, NL, Nr. 2, 2001, Seiten 53-62, XP002196402 ISSN: 1566-1199

## Beschreibung

Metallorganische Verbindungen - speziell Verbindungen der d⁸-Metalle - werden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als funktionelle Komponenten finden.

Bei den auf organischen Komponenten basierenden Organischen-Elektrolumineszenz-Vorrichtungen (allg. Beschreibung des Aufbaus vgl.

US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln.

Eine Entwicklung hierzu, die sich in den letzten beiden Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, **1999,** 75, 4-6].

Aus theoretischen Spin-statistischen Gründen ist unter Verwendung metallorganischer Verbindungen als Phosphoreszenz-Emittem eine bis zu vierfache Energie- und Leistungseffizienz möglich. Ob sich diese neue Entwicklung durchsetzten wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.

Daneben muß der effiziente chemische Zugang zu den entsprechenden Organo-Metall-Verbindungen gegeben sein. Von besonderem Interesse sind dabei Organo-Rhodium- und Iridium-Verbindungen. Bei diesen ist vor allem unter Berücksichtigung des Rhodium- bzw. des Iridiumpreises von maßgebender Bedeutung, daß ein effizienter Zugang zu entsprechenden Derivaten ermöglicht wird.

In der Literatur wurden bis jetzt zwei Bautypen von OLEDs, die Phosphoreszenzemitter als farbgebende Komponenten aufweisen, beschrieben. Der erste Typ (Typ 1) hat typischerweise den folgenden Schicht-Aufbau [M. E. Thompson et. al., Proceedings of SPIE, 31.07 - 02.08.2000, San Diego, USA, Volume 4105, Seite 119 - 124]:
1. Trägerplatte = Substrat (üblicherweise Glas oder Kunststoffolien).
2. Transparente Anode (üblicherweise Indium-Zinn-Oxid, ITO).
3. Lochtransport-Schicht: üblicherweise auf Basis von Triarylamin-Derivaten.
4. Elektronentransport- und Emissions-Schicht: diese-Schicht besteht aus einem Elektronentransportmaterial, das mit dem Phosphoreszenzemitter dotiert ist.
5. Elektronentransport-Schicht: größtenteils auf Basis von Aluminium-tris-8-hydroxy-chinoxalinat (AlQ₃).
6. Kathode: hier werden in der Regel Metalle, Metallkombinationen oder Metalliegierungen mit niedriger Austrittsfunktion verwendet so z. B. Al-Li.

Der zweite Typ (Typ 2) hat typischerweise den folgenden Schicht-Aufbau [T. Tsutsui et al. Jpn. J. Appl. Phys., **1999,** *38*, L 1502 - L 1504]:
1. Trägerplatte = Substrat (üblicherweise Glas oder Kunststoffolien).
2. Transparente Anode (üblicherweise Indium-Zinn-Oxid, ITO).
3. Lochtransport-Schicht: üblicherweise auf Basis von Triarylamin-Derivaten.
4. Matrix- und Emissions-Schicht: diese Schicht besteht aus einem Matrixmaterial üblicherweise auf Basis von Triarylamin-Derivaten, das mit dem Phosphoreszenzemitter dotiert ist.
5. Elektronentransport-/Lochblockier-Schicht: üblicherweise auf Basis von Stickstoff-Heterocyclen.
6. Elektronentransport-Schicht: größtenteils auf Basis von Aluminium-tris-8-hydroxy-chinoxalinat (AlQ₃).
7. Kathode: hier werden in der Regel Metalle, Metallkombinationen oder Metalliegierungen mit niedriger Austrittsfunktion verwendet so z. B. Al.

Es ist auch möglich das Licht aus einer dünnen transparenten Kathode auszukoppeln. Diese Vorrichtungen werden entsprechend (je nach Anwendung) strukturiert, kontaktiert und schließlich auch hermetisch eingesiegelt, da sich i. d. R. die Lebensdauer derartiger Vorrichtungen bei Anwesenheit von Wasser und/oder Luft drastisch verringert.

Die Kenndaten der oben beschriebenen OLED's zeigen zwei Schwachpunkte auf:

Zum einen, sind die bis jetzt beschriebenen Phosphoreszenzemitter auf der Basis von Iridium-Komplexen nicht zum Bau von *roten* OLED's geeignet, da keiner der bekannten Phosphoreszenzemitter im Roten, d.h. bei einer Emissionswellenlänge von größer als 615 nm emittiert. Es wurde zwar von orangen Phosphoreszenzemittern berichtet [M. E. Thompson et. al., Proceedings of SPIE, 31.07 - 02.08.2000, San Diego, USA, Volume 4105, Seite 119 - 124], nicht aber von solchen, die einen gesättigten Rot-Ton erzeugen.

Zum anderen, geht aus den Effizienz - Helligkeits - Kurven hervor, daß die Effizienz mit steigender Helligkeit stark abnimmt. Dies bedeutet, daß die in der Praxis notwendigen großen Helligkeiten nur über eine hohe Leistungsaufnahme erreicht werden können. Große Leistungsaufnahmen setzen aber große Batterieleistungen portabler Geräte (Mobile-Phones, Lap-Tops etc.) voraus. Außerdem kann die große Leistungsaufnahme, die zum großen Teil in Wärme umgesetzt wird, zur thermischen Schädigung des Displays führen.

Aus diesen Mängeln im Stand der Technik ergeben sich die folgenden Aufgaben. Zum einen besteht Bedarf zur Erzeugung von z. B. roten Triplett-Emittern gegeben, zum anderen müssen Triplett-Emitter bereitgestellt werden, die auch bei großen Helligkeiten lineare Effizienz - Helligkeits - Kurven aufweisen.

5'-Mono-, 5',5"-Di- und 5',5",5"'-Tris-diarylamino-funktionalisierte tris-orthometallierte Organo-Rhodium- und Organo-Iridium-Verbindungen - gemäß Verbindungen (I/Ia) oder (II/IIa)-, die Gegenstand der vorliegenden Erfindung sind, werden zentrale Schlüsselbausteine zur Erzeugung hocheffizienter Triplett-Emitter sein. Über eine entsprechende Diarylamino-Funktionalisierung können entscheidende Materialeigenschaften wie die Wellenlänge der Phosphoreszenzemission d. h. die Farbe, die Phosphoreszenzquantenausbeute und die Redox- und Temperaturstabilität der Emitter, um nur einige Eigenschaften beispielhaft zu nennen, eingestellt werden.
Außerdem besteht Bedarf am kovalenten Einbau dieser aktiven, lichtemittierenden Zentren in eine Vielzahl von Polymeren. So sind hier - ausgehend von den genannten Strukturen (s. Beispiele 13, 22, 23, 24) - typische C-C-Verknüpfungsreaktionen (z. B. STILLE- oder SUZUKI-Kupplung) möglich, um damit diese halogenfunktionalisierten Verbindungen entweder weiter zu funktionalisieren, oder als (Co)monomere bei der Darstellung von entsprechenden Polymeren zu verwenden.

Die Klasse der 5'-Mono-, 5',5"-Di- und 5',5",5"'-Tris-diarylamino-funktionalisierten tris-orthometallierten Organo-Rhodium- und Organo-Iridium-Verbindungen - gemäß Verbindungen (I/Ia) oder (II/IIa)- ist neu und bisher in der Literatur nicht beschrieben worden, ihre effiziente Darstellung und Verfügbarkeit als Reinstoffe ist aber für eine Reihe von elektro-optischen Anwendungen von großer Bedeutung.

Überraschend wurde nun gefunden, daß sich die Wellenlänge der Phosphoreszensemission, d.h. die "Farbe" des emittierten Lichtes, über einen großen Wellenlängenbereich gezielt einstellen läßt (s. Tabelle 1). Im Vergleich zur unsubstituierten Stammverbindung, dem *fac*-Tris[2-(2-pyridinyl-κN)phenyl-κC]-iridium(III), das eine Phosphoreszenz im Grünen aufweist, zeigen die 5'''-Tris-diarylamino-funktionalisierten tris-orthometallierten Organo-Iridium-Verbindungen - gemäß den Beispielen 1, 3, 4, 5 - eine bathochrom verschobene Phosphoreszenzemission. Innerhalb der Reihe der Substituenten N-Carbazolyl-, Diphenylamino-, N-(1-Naphthyl)-N-phenyl-amino-, Bis(4-methoxyphenyl)aminonimmt die bathochrome Verschiebung des Phosphoreszenzmaximums zu.

Dementsprechend emittiert z. B. das *fac*-Tris[2-(2-pyridinyl-κN)(5-(N-bis(4-methoxyphenyl))phenyl)-κC]-iridium(III) - gemäß Beispiel 5 - im Roten (s. Tabelle 1).

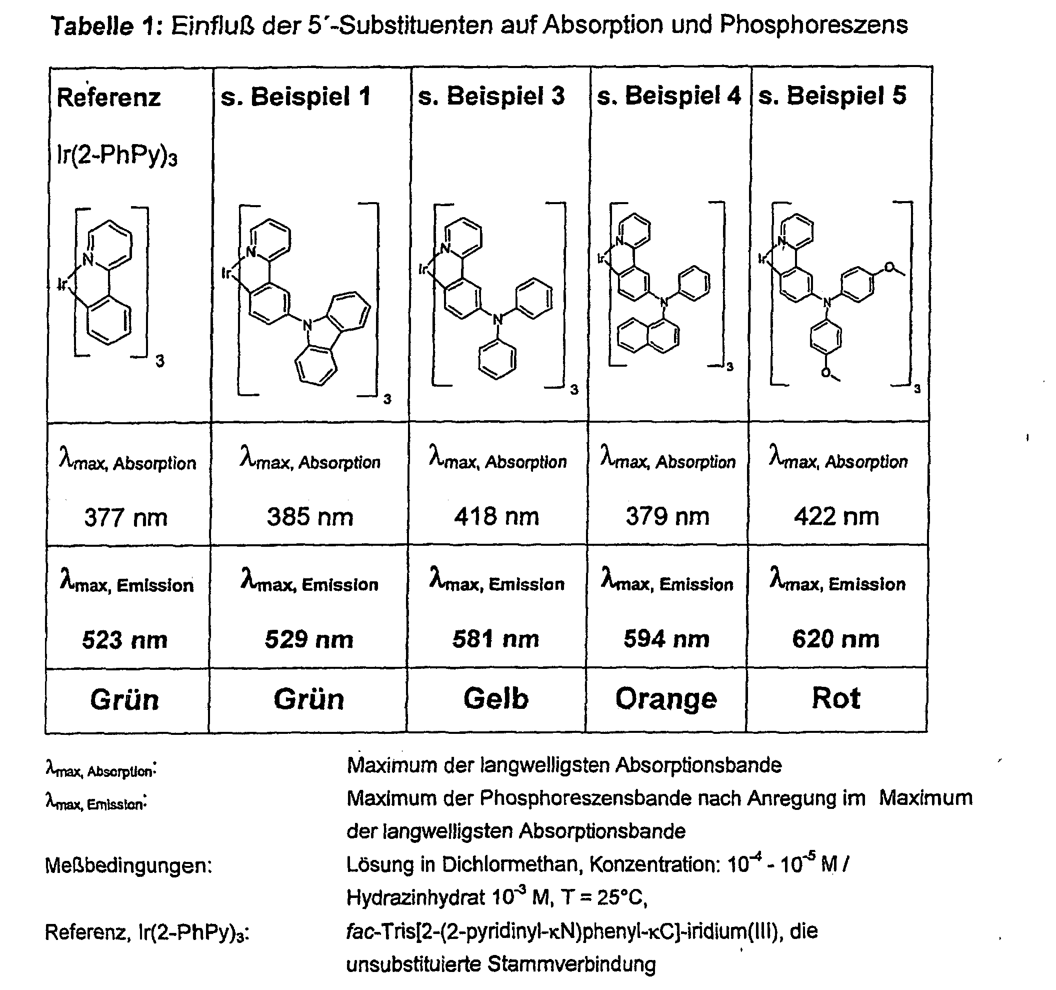

Rote Phosphoreszensemitter sind insbesondere zur Herstellung von Vollfarbdisplays, für welche die Grundfarben ROT-GRÜN-BLAU verfügbar sein müssen, von entscheidender Bedeutung.

Als nächstliegender Stand der Technik der übergangsmetallkatalysierten Diarylaminierungen von rein organischen Arylchloriden, -bromiden, -iodiden sind vor allem die Arbeiten von J. F. Hartwig et al., S. L. Buchwald et al., aber auch von S. P. Nolan et al. zu nennen. Aus der großen Zahl von Veröffentlichungen zu diesem Reaktionstyp sei im Folgenden auf einige ausgewählte Arbeiten verwiesen. Hartwig und Buchwald beschreiben insbesondere Nickel- und Palladium-katalysierte Aminierungsreaktion unter Verwendung von Phosphinliganden und einer Base **[J. F. Hartwig** et al.: J. Am. Chem. Soc. **2000,** *122(19)*, 4618-4630; J. Org. Chem. **1999,** *64(15);* **S. L. Buchwald** et al.: J. Organomet. Chem. **1999,** *576(1-2)*, 125-146; US-A-005,576,460; s. auch EP 0 802 173 A1]. Typischerweise werden bei diesen Reaktionstypen Umsätze von 70-98 % erreicht. Problematisch gestaltet sich die Reinigung der Rohprodukte, die häufig durch aufwendige chromatographische Verfahren erfolgt.

Neben den oben beschriebenen Verfahren sind Nickel- bzw. Palladium-katalysierte Diarylaminierungsreaktionen an rein organischen Arylhalogeniden, insbesondere Arylchloriden, unter Verwendung stickstoff-haltiger Ligandensysteme und einer Base, beschrieben worden. Als stickstoff haltige Ligandensysteme haben sich Imidazol-2-ylidene bzw. deren protonierte Form, die Imidazolium-Salze, aber auch Amine bewährt **[S. P. Nolan** et al.: Org. Lett. **2000,** *2(14)*, 2053-2055, Org. Lett. **1999**, *1(8)*, 1307-1309]. Auch hier werden an einfachen Modellsubstraten typischerweise Umsätze von 70 - 95 % erreicht, wobei die Reinigung der Rohprodukte durch aufwendige chromatographische Verfahren erfolgt.

Die übergangsmetallkatalysierte Diarylaminierung von koordinativ an ein Metallzentrum gebundenen Arylhalogeniden - d.h. von *metallorganischen Arylhalogeniden -* wie sie im Folgenden beschrieben ist, ist neu und in der Literatur bisher nicht bekannt.

Es wurde überraschend gefunden, daß die neuen Diarylamino-substituierten Organometallverbindungen (I/Ia) oder (II/IIa) - gemäß Schema 1 und 2 - ausgehend von den 5'-Mono-, 5',5"-Di- und 5',5",5"'-Trihalogen-substituierten tris-orthometallierten Organo-Rhodium bzw. Organo-Iridium-Verbindungen (III) bzw. (IV) [Darstellung gemäß der nicht offengelegten DE 10109027.7], d. h. ausgehend von *metallorganischen Arylhalogeniden -* durch die übergangsmetallkatalysierte Umsetzung mit einem organischen Diarylamin, in Anwesenheit eines Phosphor- bzw. Stickstoff-haltigen Additivs und einer Base, sowie unter geeigneter Wahl der Reaktionsparameter wie Reaktionstemperatur, Reaktionsmedium, Konzentration und Reaktionszeiten reproduzierbar in etwa 90 - 98 % iger Ausbeute, ohne Verwendung chromatographischer Reinigungsverfahren, gegebenenfalls nach Umkristallisation, in Reinheiten von > 99 % nach NMR bzw. HPLC erhalten werden (siehe Beispiel 1-4).

Das oben beschriebene Verfahren zeichnet sich durch drei Eigenschaften besonders aus:

Erstens ist die übergangsmetallkatalysierte, selektive 5'-Mono-, 5',5"-Di- und 5',5",5"'-Tri-Diarylaminierung von koordinativ gebundenen Arylhalogeniden - d.h. von *metallorganischen Arylhalogeniden -* unerwartet und in dieser Form nicht bekannt.

Zweitens ist der hohe erzielte Umsatz, der sich in den reproduzierbar sehr guten Ausbeuten an isoliertem Produkt widerspiegelt, unerwartet und einzigartig für die Diarylaminierung von koordinativ gebundenen Arylhalogeniden.

Drittens fallen die erhaltenen Verbindungen, ohne aufwendige chromatographische Reinigung, gegebenenfalls nach Umkristallisation, in sehr guten Reinheiten von > 99 % nach NMR bzw. HPLC an. Dies ist für die Verwendung in opto-elektronischen Bauelementen, bzw. der Benutzung als Zwischenprodukte für die Darstellung entsprechender Verbindungen essentiell.

Wie oben geschildert, sind die erfindungsgemäßen Verbindungen nicht vorbeschrieben und damit neu.

Gegenstand der vorliegenden Erfindung sind somit die Verbindungen (I) und (II), gemäß Schema 1, 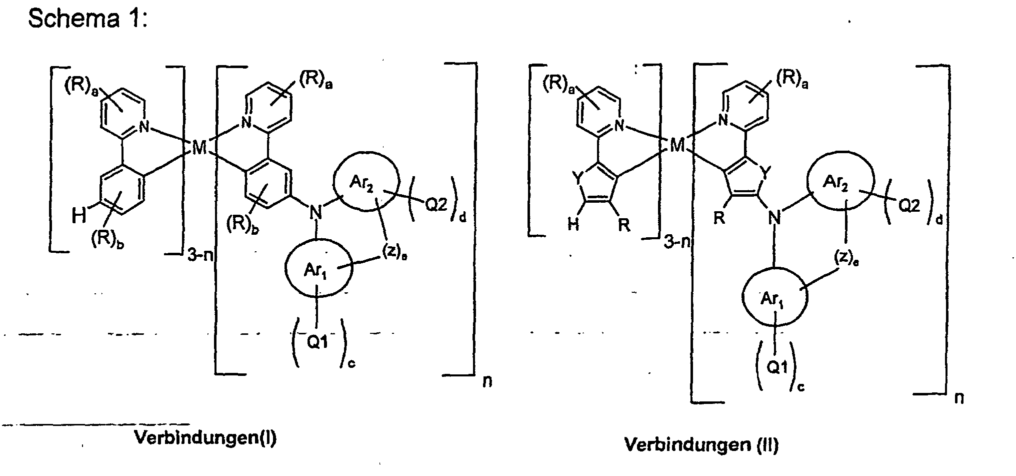 wobei die Symbole und Indizes folgende Bedeutung haben:
- M: Rh, Ir;
- Y: O, S, Se;
- Z: B-R¹, C(R)₂, -CH=CH-, -CR¹=CH-, -CR¹=CR¹-, C=O, NH, NR¹, PR¹, P(O)R¹, P(S)R¹, O, S, S=O, S(=O)₂, Se oder eine C-C-Einfachbindung;
- R: ist gleich oder verschieden bei jedem Auftreten H, F, Cl, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder-CONR² - ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
- Ar₁, Ar₂: eine Aryl- oder Heteroarylgruppe mit 2 bis 40 C-Atomen;
- Q1, Q2: ist, gleich oder verschieden bei jedem Auftreten und steht für F, Cl, Br, CN, NO₂ oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴- ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
- A⁻: ein einfach geladenes Anion oder dessen Äquivalent;
- R¹, R², R³, R⁴: sind gleich oder verschieden, H oder ein aliphatischer oder aromatischer Kohlenwasserstoffrest mit 1 bis 20 C-Atomen;
- a: ist 0, 1, 2, 3 oder 4, bevorzugt 0, 1 oder 2, besonders bevorzugt 0 oder 1;
- b: ist 0, 1, 2 oder 3, bevorzugt 0 oder 1;
- c, d: ist 0, 1, 2, 3, 4 oder 5, bevorzugt 0, 1 oder 2, besonders bevorzugt 0 oder 1;
- e: ist 0 oder 1
- n: ist 1, 2 oder 3

Auch wenn dies aus der Beschreibung hervorgeht, sei hier noch mal explizit darauf verwiesen, daß für e = 1 und Z = C-C-Einfachbindung die beiden Arylreste Ar₁ und Ar₂ über eine C-C-Einfachbindung verknüpft sind.
Ebenfalls sei darauf hingewiesen, daß für e = 0 für beliebige Z keine Verknüpfung zwischen Ar₁ und Ar₂ vorhanden ist.

Eine weitere Ausführungsform der Erfindung sind solche Rh- bzw. Ir-komplexe, die gleichzeitig Liganden vom Typ wie bei Verbindungen (I) und solche von Verbindungen (II) aufweisen, d.h. gemischte Ligandensysteme. Diese werden durch die Formeln (la) und (IIa) - gemäß Schema 2 - beschrieben: 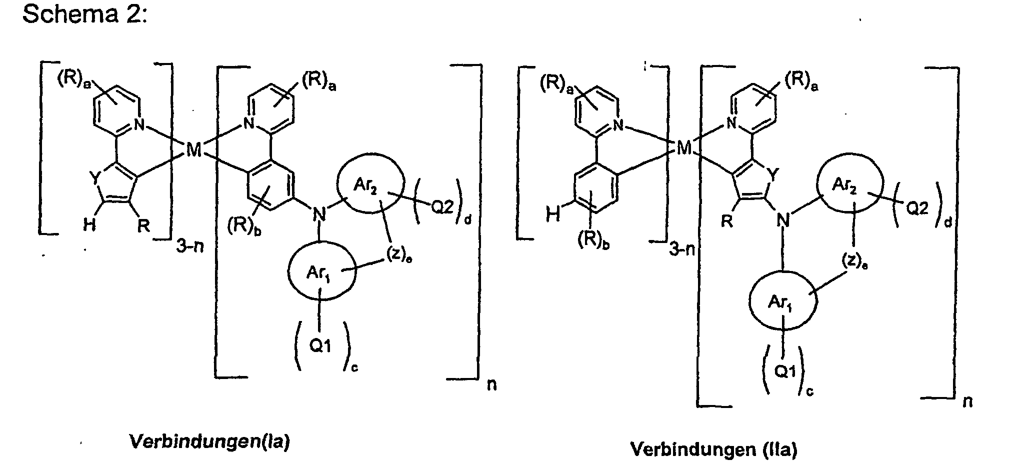 wobei die Symbole und Indizes die unter den Formeln (I) und (II) genannten Bedeutungen haben.

Bevorzugt sind erfindungsgemäße Verbindungen (la), (II) und (IIa), bei denen für das Symbol Y = O, S gilt.

Bevorzugt sind ebenfalls erfindungsgemäße Verbindungen (I), (Ia), (II) und (IIa), bei denen für das Symbol Z = C(R)₂, -CH=CH-, -CR¹=CH-, -CR¹=CR¹-, C=O, NH, NR¹, O, S und C-C-Einfachbindung gilt.

Bevorzugt sind ebenfalls erfindungsgemäße Verbindungen (I), (la), (II) und (IIa), bei denen für das Symbol R = H, F, Cl, NO₂, CN, eine geradkettige oder verzweigte oder cyclische Alkyl- oder Alkoxygruppe mit 1 bis 6 C-Atomen gilt.

Bevorzugt sind ebenfalls erfindungsgemäße Verbindungen (I), (la), (II) und (IIa), bei denen für die Symbole Ar₁ und Ar₂ = gleich oder verschieden, bei jedem Auftreten, und steht für Phenyl, 1- bzw. 2-Naphthyl, 1-, 2- bzw. 9-Anthracenyl, 2-, 3- bzw. 4-Pyridinyl, 2-, 4- bzw. 5-Pyrimidinyl, 2-Pyrazinyl, 3- bzw. 4-Pyridazinyl, 2-, 3-, 4-, 5-, 6-, 7- bzw. 8-Chinolinyl, 2- bzw. 3-Pyrrolyl, 3-, 4-, 5-Pyrazolyl, 2-, 4-, 5-Imidazolyl, 2-, 3-Thiophenyl, 2-, 3-Selenophenyl, 2- bzw. 3-Furanyl und 2-(1,3,4-Oxadiazol)yl gilt.

Bevorzugt sind ebenfalls erfindungsgemäße Verbindungen (I), (Ia), (II) und (IIa), bei denen die Diarylamino-Einheit Ar₁-N-Ar₂ einer Diphenylamino-, einer N-(1-naphthyl)-phenyl-amino-, einer Di(1-naphthyl)amino-, einer N-(2-naphthyl)-N-phenyl-amino-, einer Di(2-naphthyl)amino-, einer Bis(4-methoxyphenyl)amino-, einer Bis(4-Dimethylaminophenyl)amino-, einer Carbazolyl-, einer 3,6-Dichlorcarbazolyl-, einer 3,6-Dibromcarbazolyl-, einer Phenoxazin- oder einer Phenothiazin-Einheit entspricht.

Bevorzugt sind ebenfalls erfindungsgemäße Verbindungen (I), (la), (II) und (IIa), bei denen für die Symbole Q1 und Q2 = H, F, Cl, Br, CN, NO₂ oder eine geradkettige oder verzweigte oder cyclische Alkyl- oder Alkoxygruppe mit 1 bis 6 C-Atomen, wobei eine CH₂-Guppe durch -NR¹- ersetzt sein kann, gilt. ,

Die erfindungsgemäßen Verbindungen sind prinzipiell durch verschiedene Verfahren herstellbar, es hat sich jedoch das im folgenden beschriebene Verfahren als besonders gut geeignet herausgestellt.

Daher ist ein weiterer Gegenstand der vorliegenden Erfindung Verfahren zur Herstellung der Verbindungen (I) bzw. (II), durch Umsetzung der Verbindungen (III) bzw. (IV), 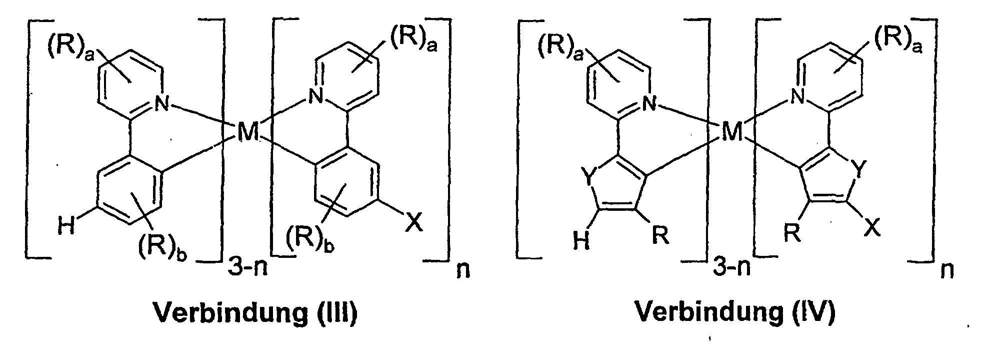 worin:
- X: Cl, Br oder I ist,
und M, die Reste R und die Indizes a, und b und n die unter Verbindung (I) bzw. (II) genannten Bedeutungen haben,
mit einem sekundären Diaryl-Amin der Formel (I) 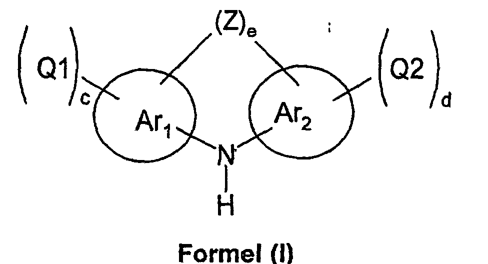 worin die Reste Z, Ar₁, Ar₂, Q1 und Q2 und die Indizes c, d und e die unter Verbindungen (I) bzw. (II) genannten Bedeutungen haben, in einem Reaktionsmedium und in Gegenwart eines Übergangsmetalls bzw. einer Übergangsmetallverbindung, eines Phosphor-haltigen bzw. Stickstoff-haltigen Additives und einer Base.

Erfindungsgemäße Übergangsmetalle bzw. Übergangsmetallverindungen sind Nickel oder Nickelverbindungen bzw. Palladium oder Palladiumverbindungen.

Erfindungsgemäß sind Nickel bzw. Nickelverbindungen wie z.B. elementares Nickel, Nickelschwamm, Nickel auf Kieselgur, Nickel auf Aluminiumoxid, Nickel auf Silica, Nickel auf Kohle, Nickel(II)acetat, Nickel(II)acetylacetonat, Nickel(II)chorid, -bromid, iodid, Additionsverbindungen des Typs NiL₂X₂ wobei X Chlor, Brom, lod und L einem neutralen Liganden wie z. B. Ammoniak, Acetonitril, Propionitril, Benzonitril, entspricht, Nickel(II)nitrat, Nickel(II)sulfat, Nickel(II)oxalat, Bis-cyclooctadiennickel(0).

Erfindungsgemäß sind Palladium bzw. Palladiumverbindungen wie z.B. elementares Palladium, Palladiumschwamm, Palladiumschwarz, Palladium auf Aktivkohle, Palladium auf Aluminiumoxid, Palladium auf Silica, Palladium auf Alkali- bzw. Erdalkalicarbonaten wie Natrium-, Kalium-, Calcium-, Strontium- oder Bariumcarbonat, Palladium auf Strontium- oder Bariumsulfat, bzw. Palladiumverbindungen wie z.B. Palladium(II)acetat, Palladium(II)trifluoroacetat, Palladium(II)propionat, Palladium(II)acetylacetonat, Palladium(II)chorid, -bromid, iodid, Additionsverbindungen des Typs PdL₂X₂ wobei X Chlor, Brom, lod und L einem neutralen Liganden wie z. B. Ammoniak, Acetonitril, Propionitril, Benzonitril, Cyclooctadien entspricht, Palladium(II)nitrat, Palladium(II)sulfat, Palladium(II)tetramin acetat, Palladium(II)tetrakis(acetonitril)-tetrafluoroborat, Tetrakis(triphenylphosphino)palladium(0) und Tris-(dibenzylidenaceton)-dipalladium(0).

Das erfindungsgemäße molare Verhältnis von Nickel, einer Nickelverbindung, Palladium oder einer Palladiumverbindung zu den Verbindungen (III) bzw. (IV) beträgt 0.1 n : 1 bis 0.00001 n : 1.

Erfindungsgemäß wird als Phosphor-haltiges Additiv ein Phosphin verwendet wird.

Erfindungsgemäße Phosphin-Liganden sind aus der Gruppe der Tri-Aryl-Phosphine, Di-Aryl-Alkyl-Phosphine, Aryl-Dialkyl-Phosphine, Trialkyl-Phosphine, Tri-Hetaryl-Phosphine, Di-Hetaryl-Alkyl-Phosphine, Hetaryl-Dialkyl-Phosphine, wobei die Substituenten am Phosphor gleich oder verschieden, chiral oder achiral sein können wobei ein oder mehrere der Substituenten die Phosphorgruppen mehrerer Phosphine verknüpfen können und wobei ein Teil dieser Verknüpfungen auch ein oder mehrere Metallatome sein können, so z.B. Tri-o-tolylphosphin, Trimesitylphosphin, Tri-*o*-anisylphosphin, Tri-(2,4,6-trismethoxyphenyl)phosphin, *Tert*butyl-di-*o*-tolylphosphin, Di-*tert*-butyl-*o*-tolylphosphin, Dicyclohexyl-2-biphenylphosphin, Di-*tert*-butyl-2-biphenylphosphin, Triethylphosphin, Tri-*iso*-propylphosphin, Tri-cyclohexylphosphin, Tri-*tert*-butylphosphin, Tri-*tert-*pentylphosphin, Bis(di-*tert*-butylphosphino)methan, 1,1'-Bis(di-*tert*-butylphosphino)ferrocen.

Besonders bevorzugt sind die Phosphine Dicyclohexyl-2-biphenylphosphin, Di-*tert*butyl-2-biphenylphosphin, Tri-*tert*-butylphosphin, Tri-*tert-*pentylphosphin.

Erfindungsgemäß werden als Stickstoff-haltige Additive Imidazolium-Salze, Imidazol-2-ylidene bzw. Amine und Aminocarbonsäuren verwendet.

Bevorzugt werden als stickstoff-haltige Additive Imidazolium-Salze wie z. B. 1,3-Bis(phenyl)imidazolium hydrochlorid, 1,3-Bis(2-methylphenyl)imidazolium hydrochlorid, 1,3-Bis(2,6-dimethylphenyl)imidazolium hydrochlorid, 1,3-Bis (2,4,6-trimethylphenyl)imidazolium hydrochlorid, 1,3-Bis(2,6-di-isopropylphenyl)imidazolium hydrochlorid, 1,3-Bis(2,6-di-*tert*-butylphenyl)imidazolium hydrochlorid, bzw. Imidazol-2-ylidene wie z. B. 1,3-Bis(phenyl)imidazol-2-yliden, 1,3-Bis(2-methylphenyl)imidazol-2-yliden, 1,3-Bis(2,6-dimethylphenyl)imidazol-2-yliden, 1,3-Bis(2,4,6-trimethylphenyl)imidazol-2-yliden, 1,3-Bis(2,6-di-*iso*propylphenyl)imidazol-2-yliden, 1,3-Bis(2,6-di-*tert*-butylphenyl)imidazol-2-yliden, bzw. aromatische Amine und Aminocarbonsäuren wie Pyridin, Lutidin, 2,2'-Bipyridyl, oder Chinolin oder α-, β-, γ, δ-Aminocarbonsäuren bzw. deren N-alkylierte Formen bzw. deren Natrium- oder Kaliumsalze so z. B. Anthranilsäure, Dimethylanthranilsäure, 2-Pyridincarbonsäure, Dimethylglycin, Dimethylaminobuttersäure oder 3-Indolylessigsäure verwendet.

Das erfindungsgemäße molare Verhältnis des Phosphor- bzw. Stickstoff-haltigen Additivs zu Nickel, einer Nickelverbindung, Palladium oder einer Palladiumverbindung beträgt 0.5 : 1 bis 1000 : 1.

Erfindungsgemäße Basen sind organische Base wie z. B. Alkali- und Erdalkalimetall-Alkoholate so z. B. Lithium-, Natrium, Kalium-, Magnesium-, Strontium- und Barium-methanolat, -ethanolat, -propanolat, -butanolat, *-iso*propanolat, -*iso*-butanolat, -*sec*-butanolat, -*tert*-butanolat, -phenolat, organische Amine wie z.B. Trimethylamin, Triethylamin, Tributylamin, Di-*iso*-propylamin, N-Ethyl-di-*iso*-propylamin, Morpholin, N-Methylmorpholin, N-Ethylmorpholin, Pyridin, 2-, 3-, 4- Methylpyridin, Lutidin oder Collidin, Tetraalkylammoniumhydroxide so z.B. Tetramethyl-, Tetraethyl-, Tetrapropyl- und Tetrabutylammoniumhydroxid, Alkaliund Erdalkalimetall-Carboxylate so z. B. Lithium-, Natrium, Kalium-, Magnesium-, Strontium- und Barium-formiat, -acetat, -propionat, -butyrat, -oxalat, oder -benzoat oder Mischungen der genannten Basen.

Ebenfalls erfindungsgemäße Basen sind anorganische Basen wie z. B. Ammoniak, Alkali- und Erdalkalimetall-Oxide so z. B. Lithium-, Natrium, Kalium-, Magnesium-, Strontium- und Barium-oxid, Alkali- und Erdalkalimetall-hydroxide so z. B. Lithium-, Natrium, Kalium-, Magnesium-, Strontium- und Barium-hydroxid, Alkali- und Erdalkalimetall-carbonate so z. B. Lithium-, Natrium, Kalium-, Magnesium-, Strontium- und Barium-carbonat, Alkalimetall-hydrogencarbonate so z. B. Lithium-, Natrium, Kalium-hydrogencarbonat, Alkalimetall-phosphate, hydrogenphosphate, dihydrogenphosphate so z. B. Lithium-, Natrium, Kalium-phosphat, - hydrogenphosphat, -dihydrogenphosphat oder Mischungen der genannten Basen.

Das erfindungsgemäße molare Verhältnis der organischen oder anorganischen Base zu den Verbindungen (III) bzw. (IV) beträgt 0.5 n : 1 bis 100 n : 1.

Erfindungsgemäße Reaktionsmedien sind protische oder aprotische, halogenfreie oder halogenierte Lösemittel so z.B. Alkohole wie Methanol, Ethanol, Propanol, Butanol, mehrwertige Alkohole wie Ethylenglykol oder Propylenglykol, Nitrile wie Acetonitril, Propionitril oder Benzonitril, Ether wie Diethylether, THF oder Dioxan, aromatische Kohlenwasserstoffe wie Toluol, *o-, m-, p*-Xylol oder ein Gemisch der isomeren Xylole, Mesitylen, Anisol, Nitrobenzol oder Chlorbenzol, N,N-Dialkylamide wie Dimethylformamid, Dimethylacetamid oder N-Methylpyrrolidinon, Sulfoxide wie Dimethylsulfoxid, Sulfone wie Dimethylsulfon oder Sulfolan, halogenierte Kohlenwasserstoffe wie Dichlormethan, Trichlormethan, 1,1-Dichlorethan, 1,2-Dichlorethan, 1,1,2,2-Tetrachlorethan.

Erfindungsgemäß wird die Umsetzung im Temperaturbereich von 0°C bis 200°C, bevorzugt bei 20°C bis 150°C, besonders bevorzugt bei 40°C bis 130°C durchgeführt.

Erfindungsgemäß liegt die Konzentration der Rhodium-haltigen bzw. Iridium-haltigen Edukte - Verbindungen (III) bzw. Verbindungen (IV) - im Bereich von 0.0005 mol/l bis 2 mol/l, besonders bevorzugt im Bereich von 0.002 mol/l bis 0.1 mol/l.

Erfindungsgemäß können die Rhodium-haltigen bzw. Iridium-haltigen Edukte gelöst oder suspendiert im Reaktionsmedium vorliegen.

Erfindungsgemäß wird die Reaktion innerhalb von 1 Stunde bis zu 100 Stunden durchgeführt, bevorzugt innerhalb von 1 h bis 60 h.

Erfindungsgemäß kann die Reaktion unter Zusatz von inerten Mahlkörpern wie z. B. Keramik-, Glas- oder Metallkugeln oder Pall- oder Raschig-Ringen durchgeführt werden.

Mit den hier erläuterten Synthesemethoden lassen sich unter anderem die im folgenden dargestellten Beispiele für Verbindungen (I) bzw. (II) herstellen.

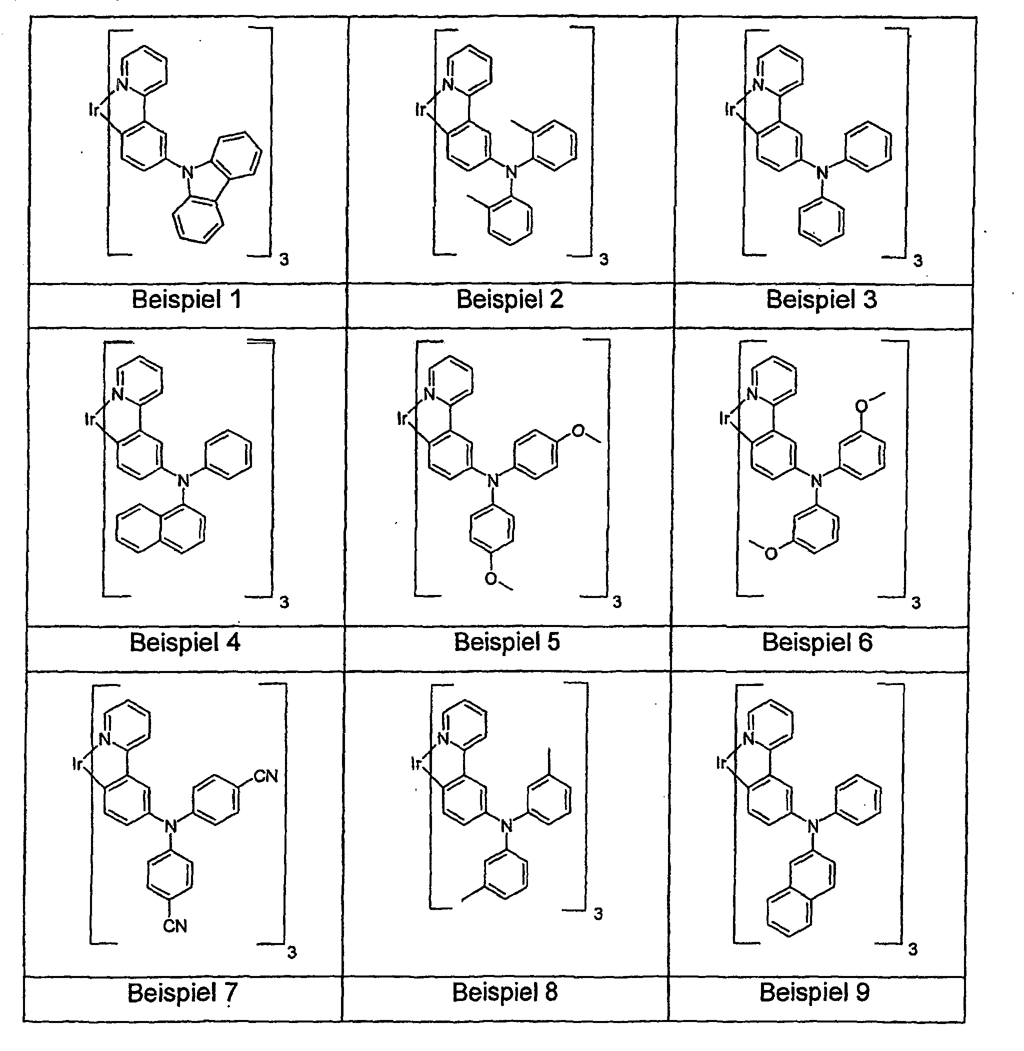

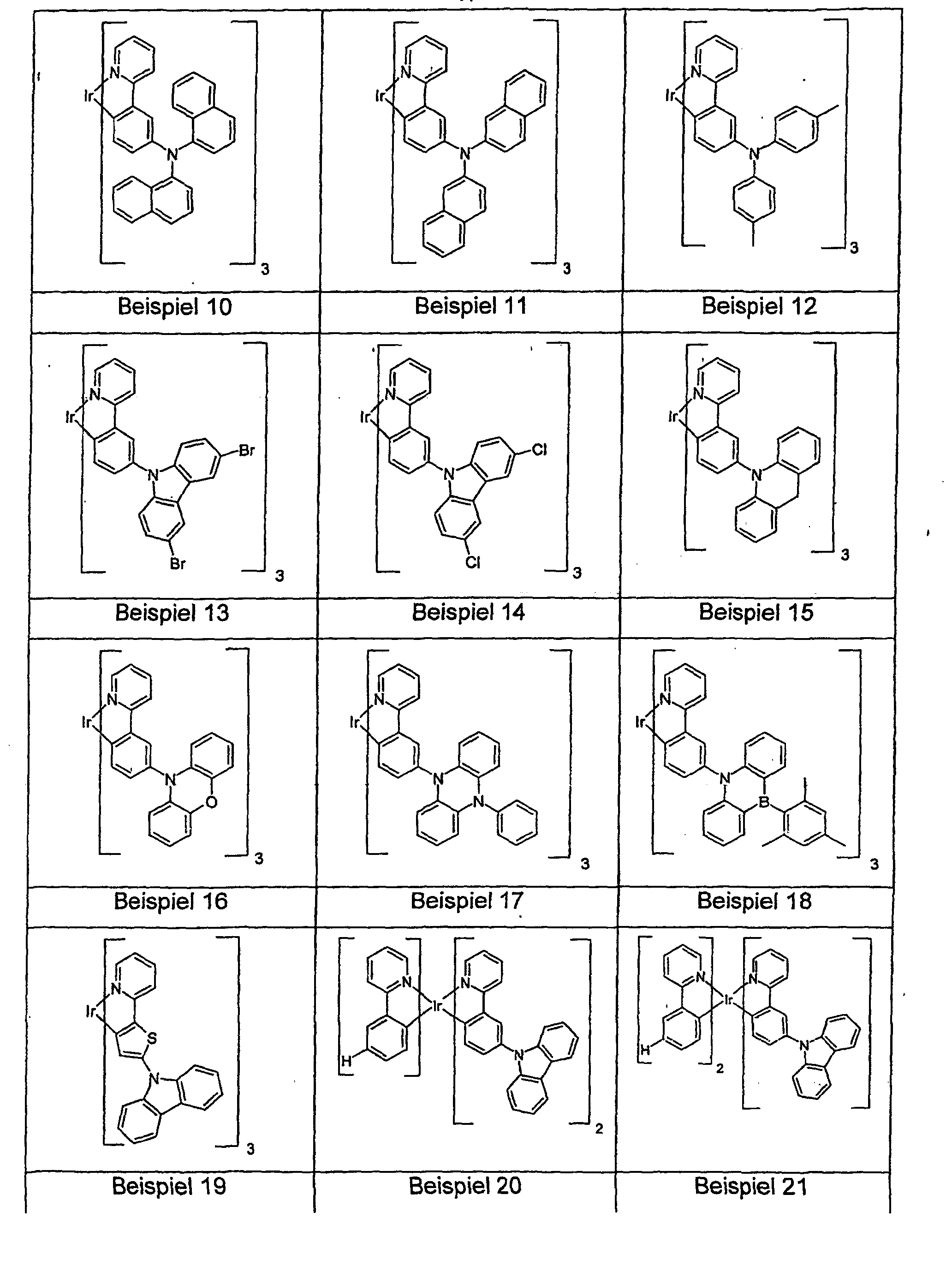

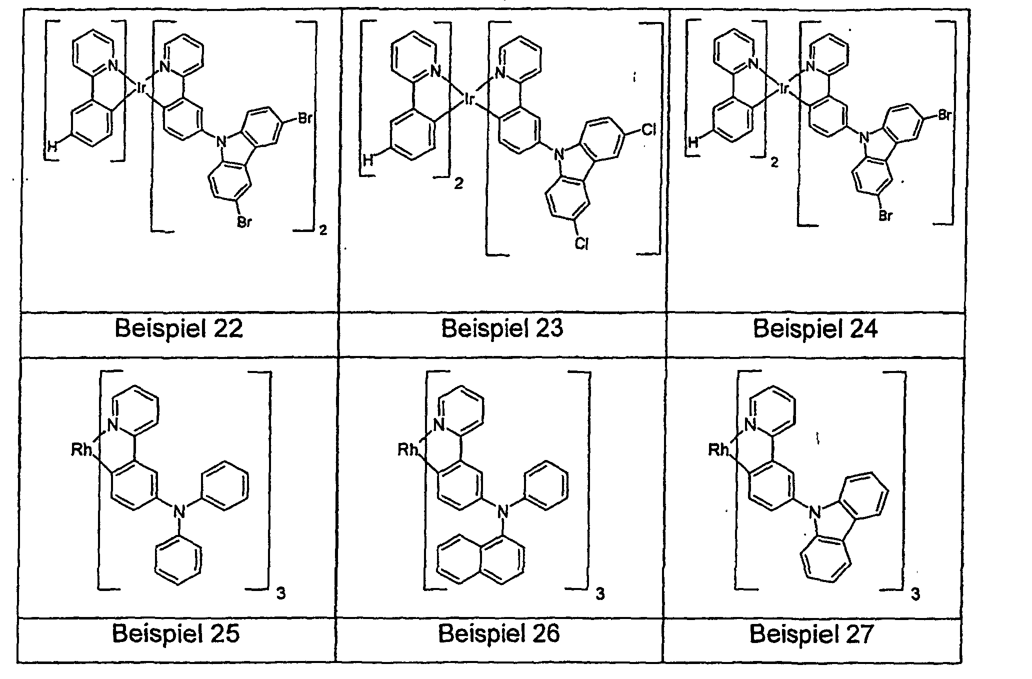

Die so erhaltenen erfindungsgemäßen Verbindungen - z.B. Verbindung gemäß den Beispielen 13, 22, 23 und 24 - können nun als Co-Monomere in konjugierte oder auch teilkonjugierte Polymere mit ein-polymerisiert werden. So können sie u. a. in lösliche Polyfluorene (z. B. gemäß EP-A-842208 oder WO 00/22026), Poly-spirobifluorene (z. B. gemäß EP-A- 707020), Poly-para-phenylene (z. B. gemäß WO 92/18552), Poly-carbazole, Polythiophene (z. B. gemäß EP-A-1028136) oder auch Copolymere die mehrere der hier genannten Einheiten aufweisen, durch Polymerisation inkorporiert werden.

Diese Polymere finden Verwendung als aktive Komponenten in elektronischen Bauteilen, wie z. B. Organischen Leuchtdioden (OLEDs), Organischen Integrierten Schaltungen (O-ICs), Organischen Feld-Effekt-Transistoren (OFETs), Organischen Dünnfilmtransistoren (OTFTs), Organischen Solarzellen (O-SCs) oder auch Organische Laserdioden (O-Laser).

Die in EP-A-842208 und WO 00/22026 offenbarten Polyfluorene sind Bestandteil dieser Beschreibung.

Die in EP-A-707020 offenbarten Poly-spirobifluorene sind Bestandteil dieser Beschreibung.

Die in WO 92/18552 offenbarten Poly-para-phenylene sind Bestandteil dieser Beschreibung.

Die in EP-A-1028136 offenbarten Polythiophene sind Bestandteil dieser Beschreibung.

Weiterhin können die erfindungsgemäßen Verbindungen natürlich auch durch die beispielsweise o. g. Reaktionstypen weiter funktionalisiert werden, und so zu erweiterten niedermolekularen Rh- oder Ir-Komplexen umgesetzt werden. Hier ist als Beispiel die Funktionalisierung mit Arylboronsäuren gem. SUZUKI oder mit Aminen gem. HARTWIG-BUCHWALD zu nennen.

Die vorliegende Erfindung wird durch die folgenden Beispiele näher erläutert, ohne sie darauf beschränken zu wollen. Der Fachmann kann aus den Schilderungen ohne erfinderisches Zutun weitere erfindungsgemäße Komplexe herstellen bzw. das erfindungsgemäße Verfahren anwenden.

### 1. Synthese von symmetrisch und asymmetrisch funktionalisierten tris-orthometallierten Organo-Rhodium- bzw. Organo-Iridium-Verbindungen:

Die nachfolgenden Synthesen wurden - sofern nicht anders angegeben - an unter einer Schutzgasatmosphäre in getrockneten Lösungsmittel durchgeführt. Die Edukte wurden von ALDRICH [Diphenylamin, Phenyl-1-naphthylamin, Carbazol, Natrium-*tert*-butanolat, Kaliumphosphat wasserfrei, Palladium(II)acetat, Tri-*tert*-butylphosphin] bezogen. *fac*-Tris[2-(2-pyridinyl-κN)(5-bromphenyl)-κC]-iridium(III) wurde, wie in der nicht offengelegten Anmeldung DE 10109027.7 beschrieben, dargestellt.
Die Zuordnung der ¹³C{¹H}-NMR-Signale wurde jeweils über DEPT-135-Spektren abgesichert (p = primäres, t = tertiäres, q = quartäres C-Atom).

### Beispiel 1: fac-Tris[2-(2-pyridinyl-κN)(5-(N-carbazolyl)phenyl)-κC]-iridium(III)

Eine Mischung von 8.915 g (10 mmol) *fac*-Tris[2-(2-pyridinyl-κN)(5-bromphenyl)-κC]-iridium(III), 10.033 g (60 mmol) Carbazol, 25.474 g (120 mmol) Tri-kaliumphosphat (wasserfrei), 134.7 mg (0.6 mmol) Palladium(II)acetat, 607.0 mg (3 mmol) Tri-*tert*-butylphosphin, 200 g Glasperlen (Durchmesser 0.6 cm) und 200 ml Xylol (Isomerengemisch) wurde - unter gutem Rühren mit einem KPG-Rührer - 60 h auf 130°C erhitzt. Nach Erkalten wurden die Glasperlen abgesiebt. Das Filtrat wurde zweimal mit je 200 ml Wasser gewaschen. Anschließend wurde der mikrokristalline Niederschlag abfiltriert (P4). Der mikrokristalline Niederschlag wurde in 500 ml Chloroform gelöst, die Lösung wurde über Celite abfiltriert, auf ein Volumen von 50 ml eingeengt, und schließlich unter Rühren mit 400 ml Ethanol versetzt. Der so erhaltene gelbe, mikrokristalline Niederschlag wurde abfiltriert (P4) und dreimal mit je 100 ml Ethanol gewaschen und dann im Vakuum (60°C, 10⁻⁴ mbar) getrocknet. Die Ausbeute - bei einer Reinheit von > 99.0 % nach ¹H-NMR - betrug 10.838 - 11.140 g entsprechend 94.2 - 96.8 %.
¹H-NMR (CDCl₃, 50 µl N₂H₄ x H₂O): [ppm] = 8.13 - 8.09 (br. m, 6H), 7.82-7.77 (br. m, 6 H), 7.69 - 7.67 (br. m, 3 H), 7.62 - 7.58 (m, 3 H), 7.41 - 7.37 (br. m, 6 H), 7.34 - 7.29 (br. m, 6 H), 7.25 - 7.19 (m, 9 H), 7.14 - 7.11 (m, 3 H), 7.02 - 6.98 (m, 3 H). ¹³C{¹H}-NMR (CDCl₃, 50 µl N₂H₄ x H₂O): [ppm] = 166.01 (q), 160. 06 (q), 147.35 (q), 145.16 (q), 141.51 (q), 138.11 (t), 136.64 (t), 130.41 (t), 129.32 (t), 125.68 (t), 123.05 (q), 122.95 (t), 122.71 (t), 120.17 (t), 119.40 (t), 119.35 (t), 110.08 (t).

### Beispiel 2: fac-Tris[2-(2-pyridinyl-κN)(5-(N-carbazolyl)phenyl)-κC]-iridium(III)

Durchführung analog zu Beispiel 1, wobei das *fac*-Tris[2-(2-pyridinyl-κN)(5-bromphenyl)-κC]-iridium(III) durch 10.325 g (10 mmol) *fac*-Tris[2-(2-pyridinyl-κN)(5-iodphenyl)-κC]-iridium(III) ersetzt wurde.
Die Ausbeute - bei einer Reinheit von > 99.0 % nach ¹H-NMR - betrug 10.943 - 11.162 g entsprechend 95.1 - 97.0 %. ¹H- und ¹³C{¹H}-NMR-Spektren siehe Beispiel 1.

### Beispiel 3: fac-Tris[2-(2-pyridinyl-κN)(5-(N-diphenylamino)phenyl)-κC]-iridium(III)

Eine Mischung von 8.915 g (10 mmol) *fac*-Tris[2-(2-pyridinyl-κN)(5-bromphenyl)-κC]-iridium(III), 6.769 g (40 mmol) Diphenylamin, 4.806 g (50 mmol) Natrium-*tert*-butanolat , 22.5 mg (0.1 mmol) Palladium(II)acetat, 40,5 mg (0.2 mmol) Tri-*tert*-butylphosphin und 200 ml Toluol wurde - unter gutem Rühren mit einem KPG-Rührer - 16 h unter Rückfluß erhitzt. Die erkaltete Reaktionsmischung wurde zweimal mit je 200 ml Wasser gewaschen. Anschließend wurde der mikrokristalline Niederschlag abfiltriert (P4). Der mikrokristalline Niederschlag wurde in 500 ml Chloroform gelöst, die Lösung wurde über Celite abfiltriert, auf ein Volumen von 50 ml eingeengt, und schließlich unter Rühren mit 400 ml Ethanol versetzt. Der so erhaltene orange, mikrokristalline Niederschlag wurde abfiltriert (P4) und dreimal mit je 100 ml Ethanol gewaschen und dann im Vakuum (60°C, 10⁻⁴ mbar) getrocknet. Die Ausbeute - bei einer Reinheit von > 99.0 % nach ¹H-NMR - betrug 11.022 -11.290 g entsprechend 95.3 - 97.6 %.
¹H-NMR (CDCl₃, 50 µl N₂H₄ x H₂O): [ppm] = 7.70 - 7.67 (br. m, 3 H), 7.56 - 7.51 (m, 6 H), 7.46 - 7.44 (m, 3 H), 7.17 - 7.12 (m, 12 H), 7.05 - 7.02 (m, 12 H), 6.89 - 6.84 (m, 12 H), 6.73 - 6.71 (m, 3 H).
¹³C{¹H}-NMR (CDCl₃, 50 µl N₂H₄ x H₂O): [ppm] = 166.30 (q), 156.65 (q), 148.32 (q), 147.11 (t), 144.64 (q), 140.09 (q), 137.66 (t), 135.90 (t), 129.21 (t), 128.89 (t), 122.54 (t), 122.46 (t), 121.96 (t), 121.13 (t), 119.22 (t).

### Beispiel 4: fac-Tris[2-(2-pyridinyl-κN)(5-(N-(1-naphthyl)-phenyl)phenyl))-κC]-iridium(III)

Eine Mischung von 8.915 g (10 mmol) *fac*-Tris[2-(2-pyridinyl-κN)(5-bromphenyl)-κC]-iridium(III), 8.772 g (40 mmol) N-(1-Naphthyl)-phenylamin, 4.806 g (50 mmol) Natrium-*tert*-butanolat , 22.5 mg (0.1 mmol) Palladium(II)acetat, 40,5 mg (0.2 mmol) Tri-*tert-*butylphosphin und 200 ml Toluol wurde, unter gutem Rühren mit einem KPG-Rührer, 12 h unter Rückfluß erhitzt. Die erkaltete Reaktionsmischung wurde zweimal mit je 200 ml Wasser gewaschen. Anschließend wurde der mikrokristalline Niederschlag abfiltriert (P4). Der mikrokristalline Niederschlag wurde in 500 ml Chloroform gelöst, die Lösung wurde über Celite abfiltriert, auf ein Volumen von 50 ml eingeengt, und schließlich unter Rühren mit 400 ml Ethanol versetzt. Der so erhaltene mikrokristalline Niederschlag wurde abfiltriert (P4) und dreimal mit je 100 ml Ethanol gewaschen und dann im Vakuum (60°C, 10⁻⁴ mbar) getrocknet. Die Ausbeute - bei einer Reinheit von > 99.0% nach ¹H-NMR - betrug 12.41.7 - 12.683 g entsprechend 95.0 - 96.8 %.
¹H-NMR (CD₂Cl₂, 50 µl N₂H₄ x H₂O): [ppm] = 7.99 - 7.95 (m, 3 H), 7.84 - 7.80 (m, 3 H), 7.70 - 7.67 (m, 3 H), 7.61 - 7.56 (m, 3 H), 7.56 - 7.53 (m, 3H), 7.53 - 7.45 (m, 6 H), 7.43 - 7.32 (m, 6 H), 7.32 - 7.24 (m, 6 H), 7.06 - 7.01 (m, 6 H), 6.87 - 6.83 (m, 3 H), 6.77 - 6.70 (m, 12 H), 6.68 - 6.65 (m, 3 H).
¹³C{¹H}-NMR (CD₂Cl₂, 50 µl N₂H₄ x H₂O): [ppm] = 166.36 (q), 155.68 (q), 149.98 (q), 147.48 (t), 144.87 (q), 144.29 (q), 141.44 (q), 141.44 (q), 137.51 (t), 136.38 (t), 135.64 (q), 131.58 (q), 129.03 (t), 128.54 (t), 127.56 (t), 127.01 (t), 126.64 (t), 126.20 (t), 126.20 (t), 126.02 (t), 124.77 (t), 122.55 (t), 120.89 (t), 119.58 (t), 119.34 (t), 119.18 (t).

### Beispiel 5: fac-Tris[2-(2-pyridinyl-κN)(5-(bis(4-methoxyphenyl)phenyl))-κC]-iridium(III)

Eine Mischung von 8.915 g (10 mmol) *fac*-Tris[2-(2-pyridinyl-κN)(5-bromphenyl)-κC]-iridium(III), 9.171 g (40 mmol) Bis(4-methoxyphenyl)amin, 4.806 g (50 mmol) Natrium-tert-butanolat , 22.5 mg (0.1 mmol) Palladium(II)acetat, 40,5 mg (0.2 mmol) Tri-*tert*-butylphosphin und 200 ml Toluol wurde, unter gutem Rühren mit einem KPG-Rührer, 12 h unter Rückfluß erhitzt. Die erkaltete Reaktionsmischung wurde zweimal mit je 200 ml Wasser gewaschen. Anschließend wurde der mikrokristalline Niederschlag abfiltriert (P4). Der mikrokristalline Niederschlag wurde in 500 ml Chloroform gelöst, die Lösung wurde über Celite abfiltriert, auf ein Volumen von 50 ml eingeengt, und schließlich unter Rühren mit 400 ml Ethanol versetzt. Der so erhaltene mikrokristalline Niederschlag wurde abfiltriert (P4) und dreimal mit je 100 ml Ethanol gewaschen und dann im Vakuum (60°C, 10⁻⁴ mbar) getrocknet. Die Ausbeute - bei einer Reinheit von > 99.0 % nach ¹H-NMR - betrug 12.763 - 12.994 g entsprechend 94.6 - 96.3 %.
¹H-NMR (CDCl₃, 50 µl N₂H₄ x H₂O): [ppm] = 7.58 - 7.55 (m, 3 H), 7.47 - 7.41 (m, 6 H), 7.29 - 7.27 (m, 3 H), 6.90 - 6.85 (m, 12 H), 6.79 - 6.75 (m, 3 H), 6.72 - 6.69 (m, 3 H), 6.68 - 6.63 (m, 12 H), 6.60 - 6.57 (m, 3 H), 3.73 (s, 18 H, CH₃).
¹³C{¹H}-NMR (CDCl₃, 50 µl N₂H₄ x H₂O): [ppm] = 166.45 (q), 154.73 (q), 154.33 (q), 147.06 (t), 144.19 (q), 142.37 (q), 141.18 (q), 137.30 (t), 135.67 (t), 127.27 (t), 124.29 (t), 121.77 (t), 120.28 (t), 119,01 (t), 114.34 (t), 55.47 (p).

## Patentansprüche

1. Verbindungen der Formel (I) und (II), 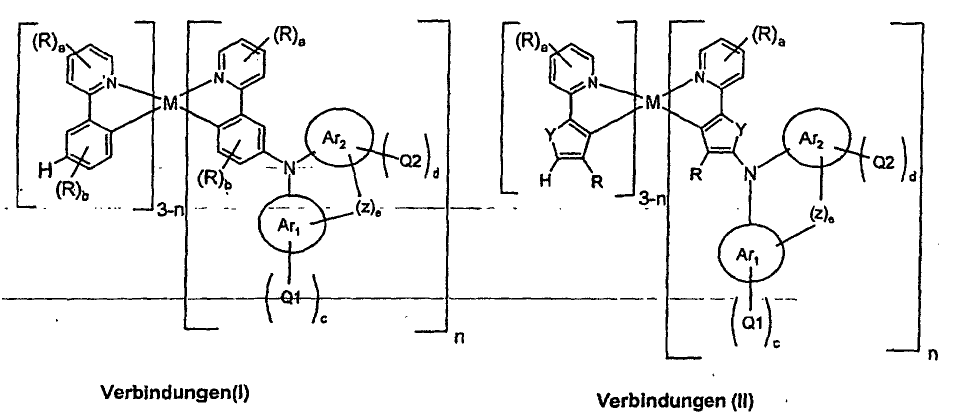 wobei die Symbole und Indizes folgende Bedeutung haben:
M Rh, Ir;
Y O, S, Se;
Z B-R¹, C(R)₂, -CH=CH-, -CR¹=CH-, -CR¹=CR¹-, C=O, NH, NR¹, PR¹, P(O)R¹, P(S)R¹, O, S, S=O, S(=O)₂, Se oder eine C-C-Einfachbindung;
R ist gleich oder verschieden bei jedem Auftreten H, F, Cl, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder-CONR² - ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
Ar₁, Ar₂ eine Aryl- oder Heteroarylgruppe mit 1 bis 40 C-Atomen;
Q1, Q2 ist, gleich oder verschieden bei jedem Auftreten und steht für F, Cl, Br, CN, NO₂ oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴- ersetzt sein können und wobei ein oder mehrere H-Atome durch F ersetzt sein können, oder eine Aryl - oder Heteroarylgruppe mit 4 bis 14 C-Atome, die durch einen oder mehrere, nicht aromatische Reste R substituiert sein kann;
A⁻ ein einfach geladenes Anion oder dessen Äquivalent;
R¹,R²,R³,R⁴ sind gleich oder verschieden, H oder ein aliphatischer oder aromatischer Kohlenwasserstoffrest mit 1 bis 20 C-Atomen;
a ist 0, 1, 2, 3 oder 4, bevorzugt 0, 1 oder 2, besonders bevorzugt 0 oder 1;
b ist 0, 1, 2 oder 3, bevorzugt 0 oder 1;
c, d ist 0, 1, 2, 3, 4 oder 5, bevorzugt 0, 1 oder 2, besonders bevorzugt 0 oder 1;
e ist 0 oder 1
n ist 1, 2 oder 3

2. Verbindungen der Formel (la) und (IIa) 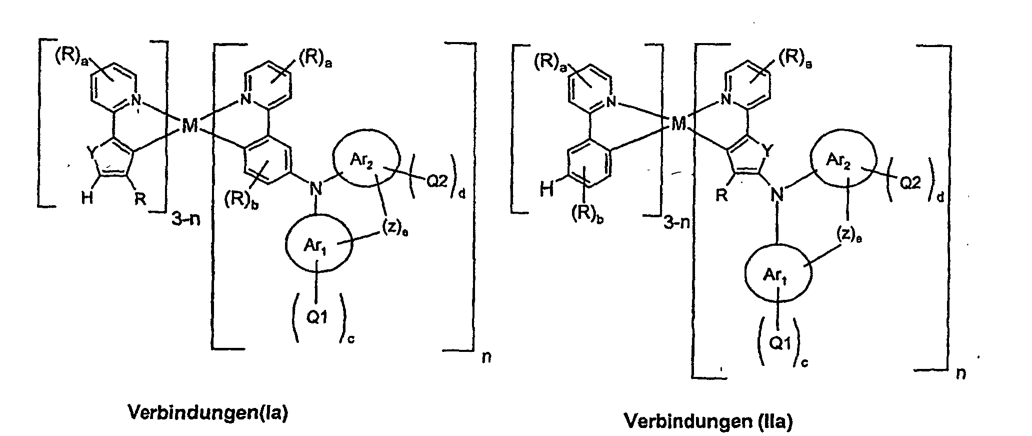 wobei die Symbole und Indizes die Bedeutungen wie in Anspruch 1 haben.

3. Verbindungen gemäß Anspruch 1 und/oder 2 bei denen das Symbol Y = O, S bedeutet.

4. Verbindungen gemäß einem oder mehreren der Ansprüche 1 bis 3 **dadurch gekennzeichnet, daß** für Z = C(R)₂, -CH=CH-, -CR¹=CH-, -CR¹=CR¹-, C=O, NH, NR¹, O, S und C-C-Einfachbindung gilt.

5. Verbindungen gemäß einem oder mehreren der Ansprüche 1 bis 4 **dadurch gekennzeichnet, daß** für R = H, F, Cl, NO₂, CN, eine geradkettige oder verzweigte oder cyclische Alkyl- oder Alkoxygruppe mit 1 bis 6 C-Atomen gilt.

6. Verbindungen gemäß einem oder mehreren der Ansprüche 1 bis 5 **dadurch gekennzeichnet, daß** für Ar₁ und Ar₂ gleich oder verschieden bei jedem Auftreten für Phenyl, 1- bzw. 2-Naphthyl, 1-, 2- bzw. 9-Anthracenyl, 2-, 3- bzw. 4-Pyridinyl, 2-, 4-bzw. 5-Pyrimidinyl, 2-Pyrazinyl, 3- bzw. 4-Pyridazinyl, 2-, 3-, 4-, 5-, 6-, 7- bzw. 8-Chinolinyl, 2- bzw. 3-Pyrrolyl, 3-, 4-, 5-Pyrazolyl, 2-, 4-, 5-Imidazolyl, 2-, 3-Thiophenyl, 2-, 3-Selenophenyl, 2- bzw. 3-Furanyl und 2-(1,3,4-Oxadiazol)yl steht.

7. Verbindungen gemäß einem oder mehreren der Ansprüche 1 bis 6 **dadurch gekennzeichnet, daß** die Diarylamino-Einheit Ar₁-N-Ar₂ einer Diphenylamino-, einer N-(1-naphthyl)-phenyl-amino-, einer Di(1-naphthyl)amino-, einer N-(2-naphthyl)phenyl-amino-, einer Di(2-naphthyl)amino-, einer Bis(4-methoxyphenyl)amino-, einer Bis(4-Dimethylaminophenyl)amino-, einer Carbazolyl-, einer 3,6-Dichlorcarbazolyl-, einer 3,6-Dibromcarbazolyl-, einer Phenoxazin- oder einer Phenothiazin-Einheit entspricht.

8. Verbindungen gemäß einem oder mehreren der Ansprüche 1 bis 7 **dadurch gekennzeichnet, daß** für Q1 und Q2 = F, Cl, Br, CN, NO₂ oder eine geradkettige oder verzweigte oder cyclische Alkyl- oder Alkoxygruppe mit 1 bis 6 C-Atomen, wobei eine CH₂-Guppe durch -NR¹- ersetzt sein kann, gilt.

9. Verfahren zur Herstellung der Verbindungen gemäß Anspruch 1,
durch Umsetzung der Verbindungen (III) bzw. (IV), 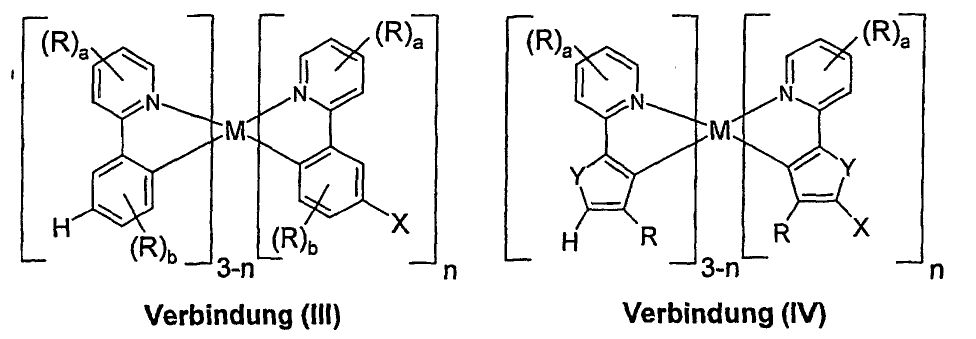 worin
X Cl, Br oder I ist,
mit einem sekundären Diaryl-Amin der Formel (I) 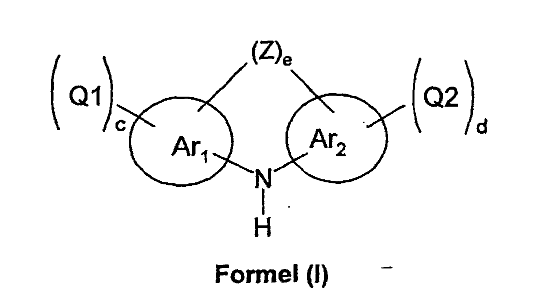 und die restlichen Symbole und Indizes gemäß Anspruch 1 sind, in einem Reaktionsmedium und in Gegenwart eines Übergangsmetalls bzw. einer Übergangsmetallverbindung, eines Phosphor-haltigen bzw. Stickstoff-haltigen Additivs und einer Base.

10. Verfahren gemäß Anspruch 9, **dadurch gekennzeichnet, daß** als Übergangsmetall bzw. Übergangsmetallverbindung Nickel bzw. Nickelverbindungen bzw. Palladium bzw. Palladiumverbindungen verwendet werden.

11. Verfahren gemäß den Ansprüchen 10 und/oder 11 **dadurch gekennzeichnet, daß** das molare Verhältnis von Nickel oder einer Nickelverbindung bzw. von Palladium oder einer Palladiumverbindung zu den Verbindungen (III) bzw. (IV) 0.1 n : 1 bis 0.00001 n : 1 beträgt.

12. Verfahren gemäß einem oder mehreren der Ansprüche 9 bis 11 **dadurch gekennzeichnet, daß** als Phosphor-haltiges Additiv ein Phosphin verwendet wird.

13. Verfahren gemäß einem oder mehreren der Ansprüche 9 bis 12 **dadurch gekennzeichnet, daß** als Stickstoff-haltige Additive lmidazolium-Salze, Imidazol-2-ylidene, Amine oder Aminocarbonsäuren verwendet werden.

14. Verfahren gemäß einem oder mehreren der Ansprüche 9 bis 13 **dadurch gekennzeichnet, daß** das molare Verhältnis der phosphor-haltigen bzw. stickstoffhaltigen Additive zu den Übergangsmetallen bzw. Übergangsmetallverbindungen Nickel, einer Nickelverbindung, Palladium oder einer Palladiumverbindung 0.5 : 1 bis 1000 : 1 beträgt.

15. Verfahren gemäß einem oder mehreren der Ansprüche 9 bis 14 **dadurch gekennzeichnet, daß** das molare Verhältnis der organischen bzw. anorganischen Base zu den Verbindungen (III) bzw. (IV) 0.5 n : 1 bis 100 n : 1 beträgt.

16. Verbindungen gemäß Anspruch 1 oder 2 **dadurch gekennzeichnet, daß**, ihre Reinheit (mittels 1 H-NMR und/oder HPLC bestimmt) mehr als 99% beträgt.

17. Konjugierte oder teilkonjugierte Polymere enthaltend eine oder mehrere Verbindungen der Formel (I/Ia) und/oder (II/IIa) gemäß den Ansprüchen 1 oder 2.

18. Polymere gemäß Anspruch 17 **dadurch gekennzeichnet, daß** das Polymer aus der Gruppe Polyfluorene, Poly-spirobifluorene, Poly-para-phenylene, Poly-carbazole, Poly-vinylcarbazole, Polythiophene oder auch aus Copolymeren, die mehrere der hier genannten Einheiten aufweisen, ausgewählt ist.

19. Polymere gemäß den Ansprüchen 17 und/oder 18 **dadurch gekennzeichnet, daß** das Polymer in organischen Lösemitteln löslich ist.

20. Elektronisches Bauteil enthaltend mindestens ein Polymer gemäß einem der Ansprüche 17 bis 19.

## Claims

1. A compound of the formula (I) or (II) 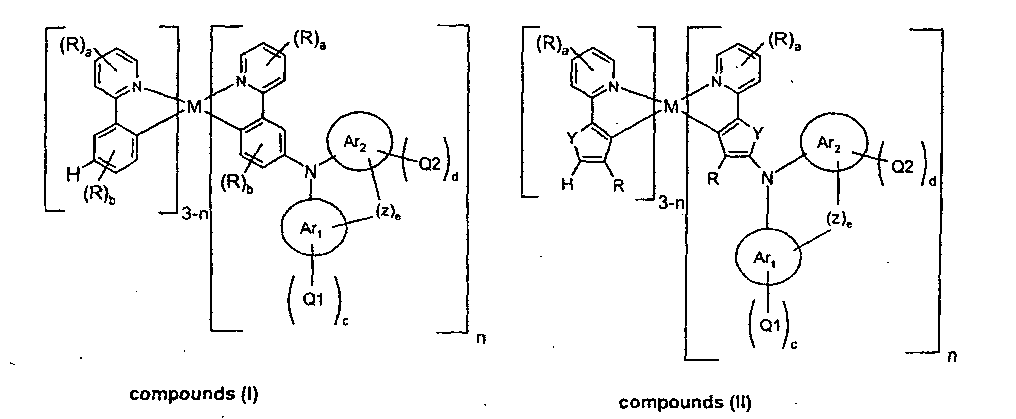 where the symbols and indices are defined as follows:
M is Rh, Ir;
Y is O, S, Se;
Z is B-R¹, C(R)₂, -CH=CH-, -CR¹=CH-, -CR¹=CR¹-, C=O, NH, NR¹, PR¹, P(O)R¹, P(S)R¹, O, S, S=O, S(=O)₂, Se or a C-C single bond;
R is the same or different at each occurrence and is H, F, Cl, NO₂, CN, a straight-chain or branched or cyclic alkyl or alkoxy group which has from 1 to 20 carbon atoms and in which one or more nonadjacent CH₂ groups may be replaced by -O-, -S-, -NR¹- or -CONR²-, and in which one or more hydrogen atoms may be replaced by F, or an aryl or heteroaryl group having from 4 to 14 carbon atoms which may be substituted by one or more nonaromatic R radicals; and a plurality of R substituents, either on the same ring or on the two different rings together may in turn form a further mono- or polycyclic ring system;
Ar₁, Ar₂ are each an aryl or heteroaryl group having from 1 to 40 carbon atoms;
Q1, Q2 are the same or different at each occurrence and are each F, Cl, Br, CN, NO₂ or a straight-chain or branched or cyclic alkyl or alkoxy group which has from 1 to 20 carbon atoms and in which one or more nonadjacent CH₂ groups may be replaced by -O-, -S-, -CO-, -COO-, -O-CO-, -NR¹-, -(NR²R³)⁺A⁻ or -CONR⁴, and in which one or more hydrogen atoms may be replaced by F, or an aryl or heteroaryl group having from 4 to 14 carbon atoms which may be substituted by one or more nonaromatic R radicals;
A⁻ is a singly charged anion or its equivalent;
R¹,R²,R³,R⁴ are the same or different and are each H or an aliphatic or aromatic hydrocarbon radical having from 1 to 20 carbon atoms;
a is 0, 1, 2, 3 or 4, preferably 0, 1 or 2, more preferably 0 or 1;
b is 0, 1, 2 or 3, preferably 0 or 1;
c, d are each 0, 1, 2, 3, 4 or 5, preferably 0, 1 or 2, more preferably 0 or 1;
e is 0 or 1;
n is 1, 2 or 3.

2. A compound of the formula (Ia) or (IIa) 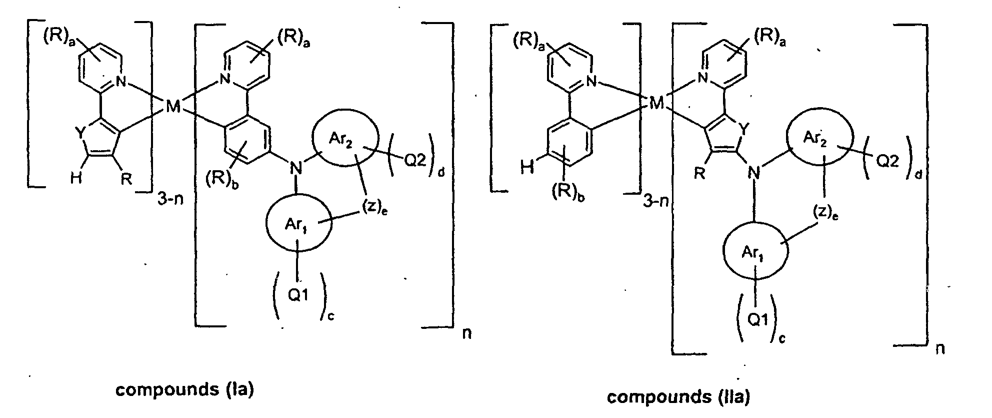 where the symbols and indices are as defined in claim 1.

3. A compound as claimed in claim 1 and/or 2 in which the symbol Y = O, S.

4. A compound as claimed in one or more of claims 1 to 3, **characterized in that** Z = C(R)₂, -CH=CH-, -CR¹=CH-, -CR¹=CR¹-, C=O, NH, NR¹, O, S and C-C single bond.

5. A compound as claimed in one or more of claims 1 to 4, **characterized in that** R = H, F, Cl, NO₂, CN, a straight-chain or branched or cyclic alkyl or alkoxy group having from 1 to 6 carbon atoms.

6. A compound as claimed in one or more of claims 1 to 5, **characterized in that** Ar₁ and Ar₂ are the same or different at each occurrence and are each phenyl, 1- or 2-naphthyl, 1-, 2- or 9-anthracenyl, 2-, 3- or 4-pyridinyl, 2-, 4- or 5-pyrimidinyl, 2-pyrazinyl, 3- or 4-pyridazinyl, 2-, 3-, 4-, 5-, 6-, 7- or 8-quinolinyl, 2- or 3-pyrrolyl, 3-, 4-, 5-pyrazolyl, 2-, 4-, 5-imidazolyl, 2-, 3-thiophenyl, 2-, 3-selenophenyl, 2- or 3-furanyl and 2-(1,3,4-oxadiazol)yl.

7. A compound as claimed in one or more of claims 1 to 6, **characterized in that** the diarylamino unit Ar₁-N-Ar₂ is a diphenylamino, an N-(1-naphthyl)phenylamino, a di(1-naphthyl)amino, an N-(2-naphthyl)phenylamino, a di(2-naphthyl)amino, a bis(4-methoxyphenyl)amino, a bis(4-dimethylaminophenyl)amino, a carbazolyl, a 3,6-dichlorocarbazolyl, a 3,6-dibromocarbazolyl, a phenoxazine or a phenothiazine unit.

8. A compound as claimed in one or more of claims 1 to 7, **characterized in that** Q1 and Q2 are each F, Cl, Br, CN, NO₂ or a straight-chain or branched or cyclic alkyl or alkoxy group which has from 1 to 6 carbon atoms and in which one CH₂ group may be replaced by -NR¹-.

9. A process for preparing the compounds as claimed in claim 1, by reacting the compounds (III) and (IV) 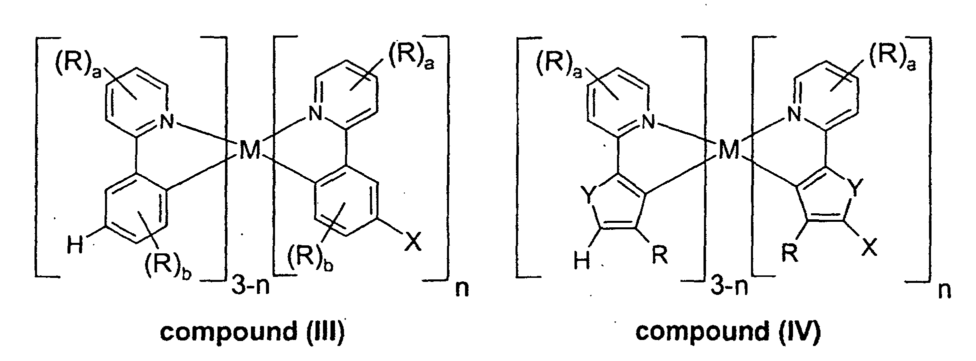 where
X is Cl, Br or I
with a secondary diarylamine of the formula (I) 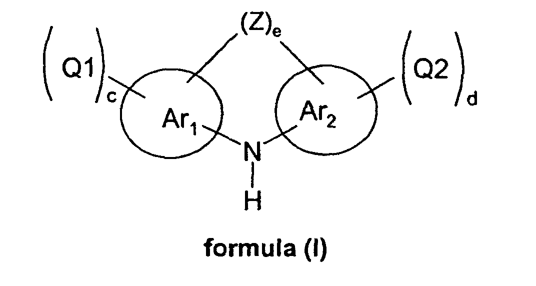 and the remaining symbols and indices are as defined in claim 1, in a reaction medium and in the presence of a transition metal or of a transition metal compound, of a phosphorus or nitrogen additive and of a base.

10. The process as claimed in claim 9, **characterized in that** the transition metal or transition metal compound used is nickel or nickel compounds or palladium or palladium compounds.

11. The process as claimed in claims 10 and/or 11, **characterized in that** the molar ratio of nickel or of a nickel compound, or of palladium or of a palladium compound to the compounds (III) and (IV) is from 0.1 n:1 to 0.00001 n:1.

12. The process as claimed in one or more of claims 9 to 11, **characterized in that** the phosphorus additive used is a phosphine.

13. The process as claimed in one or more of claims 9 to 12, **characterized in that** the nitrogen additive used is an imidazolium salt, imidazol-2-ylidene, amine or amino carboxylic acid.

14. The process as claimed in one or more of claims 9 to 13, **characterized in that** the molar ratio of the phosphorus or nitrogen additives to the transition metals or transition metal compounds nickel and nickel compounds, palladium or palladium compounds is from 0.5:1 to 1000:1.

15. The process as claimed in one or more of claims 9 to 14, **characterized in that** the molar ratio of the organic or inorganic base to the compounds (III) or (IV) is from 0.5n:1 to 100n:1.

16. A compound as claimed in claim 1 or 2, **characterized in that** its purity (determined by means of 1 H NMR and/or HPLC) is more than 99%.

17. A conjugated or semiconjugated polymer comprising one or more compounds of the formula (I)/(Ia) and/or (II)/(IIa) as claimed in claims 1 or 2.

18. A polymer as claimed in claim 17, which is selected from the group of polyfluorenes, poly-spiro-bifluorenes, poly-para-phenylenes, polycarbazoles, polyvinylcarbazoles, polythiophenes or else from copolymers which have a plurality of the units specified here.

19. A polymer as claimed in claims 17 and/or 18, which is soluble in organic solvents.

20. An electronic component comprising at least one polymer as claimed in one of claims 17 to 19.

## Revendications

1. Composés de formule (I) et (II), 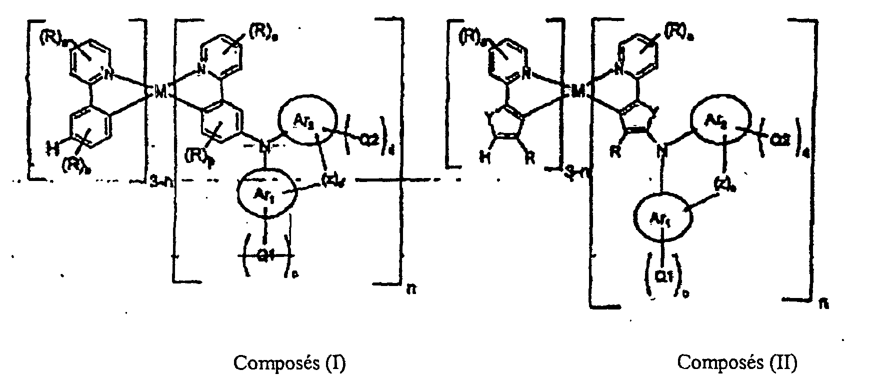 les symboles et indices ayant les significations suivantes:
M Rh, Ir;
Y O, S, Se;
Z B-R¹, C(R)₂, -CH=CH-, - CR¹= CH-, -CR¹=CR¹-, C=O, NH, NR¹, PR¹, P(O)R¹, P (S)R¹, O, S, S=0, S(=O)₂, Se ou une liaison simple C-C;
R est égal ou différent dans chaque occurrence H, F, Cl, NO₂, CN, un groupe alkyle ou alcoxyle linéaire ou ramifié ou cyclique avec 1 à 20 atomes C, un ou plusieurs groupes CH₂ non voisins pouvant être remplacés par -O-, -S-, -NR¹- ou -CONR²- et un ou plusieurs atomes H pouvant être remplacés par F, ou un groupe aryle ou hétéroaryle avec 4 à 14 atomes C qui peut être substitué par un ou plusieurs radicaux R non aromatiques; plusieurs substituants R, qu'ils soient fixés sur le même cycle ou les deux cycles différents pouvant ouvrir ensemble à leur tour un autre système de cycle monocyclique ou polycyclique;
Ar₁, Ar₂ un groupe aryle ou hétéroaryle avec 4 à 40 atomes C;
Q1, Q2 est égal ou différent dans chaque occurrence et figure pour F, Cl, Br, CN, NO₂, ou un groupe alkyle ou alcoxyle linéaire ou ramifié ou cyclique avec 1 à 20 atomes C, un ou plusieurs groupes CH₂ non voisins pouvant être remplacés par -O-, -S-, -CO-, -COO-, -O-CO-, - NR¹-, -(NR²R³)⁺A⁻, ou -CONR⁴- et un ou plusieurs atomes H pouvant être remplacés par F, ou un groupe aryle ou hétéroaryle avec 4 à 14 atomes C qui peut être substitué par un ou plusieurs radicaux R non aromatiques;
A⁻ un ion monochargé ou équivalent de celui-ci ;
R¹, R², R³, R⁴ sont égaux ou différents, H ou un groupe d'hydrocarbures aliphatiques ou aromatiques avec 1 à 20 atomes C;
a est 0, 1, 2, 3, ou 4, de préférence 0, 1 ou 2, de façon particulièrement préférentielle 0 ou 1 ;
b est 0, 1, 2 ou 3, de préférence 0 ou 1;
c, d est 0, 1, 2, 3, 4 ou 5, de préférence 0, 1 ou 2, de façon particulièrement préférentielle 0 ou 1 ;
e est 0 ou 1
n est 1, 2 ou 3

2. Composés de formule (Ia) et (IIa), 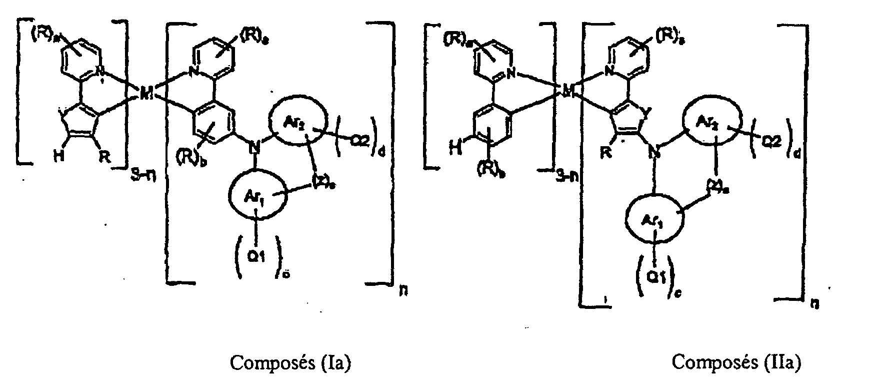 les symboles et indices ayant les significations telles que dans la revendication 1.

3. Composés selon la revendication 1 et/ou 2 dans lesquels le symbole Y signifie Y = O, S.

4. Composés selon l'une ou plusieurs des revendications 1 à 3, **caractérisés en ce que** pour Z vaut Z = C(R)₂, -CH=CH-, -CR¹=CH-, -CR¹=CR¹-, C=O, NH, NR¹, O, S et une liaison simple C-C.

5. Composés selon l'une ou plusieurs des revendications 1 à 4, **caractérisés en ce que** pour R vaut R=H, F, Cl, NO₂, CN, un groupe alkyle ou alcoxyle linéaire ou ramifié ou cyclique avec 1 à 6 atomes C.

6. Composés selon l'une ou plusieurs des revendications 1 à 5, **caractérisés en ce que** pour Ar₁ et Ar₂ figure égal ou différent dans chaque occurrence pour phényle, 1-ou 2-naphtyle, 1-, 2- ou 9-anthracényle, 2-, 3- ou 4-pyridinyle, 2-, 4- ou 5-pyrimidinyle, 2-pyrazinyle, 3- ou 4-pyridazinyle, 2-, 3-, 4-, 5, 6-, 7-ou 8-quinoléinyle, 2- ou 3-pyrrolyle, 3-, 4-, 5-pyrazolyle, 2-, 4-, 5-imidazolyle, 2-, 3-thiophényle, 2-, 3-sélénéophényle, 2- ou 3-furanyle et 2-(1,3,4-oxadiazol)yle.

7. Composés selon l'une ou plusieurs des revendications 1 à 6, **caractérisés en ce que** l'unité de diarylamine Ar₁-N-Ar₂ correspond à une unité de diphénylamine, de N-(1-naphtyle)-phénylamine, de di(1-naphtyle)amine, de N-(2-naphthyle)-phénylamine, de di(2-naphtyle)amine, de bis(4-méthoxyphényle)amine, de bis(4-diméthylaminephényle)amine, de carbazolyle, de 3,6-dichlorocarbazolyle, de 3,6-dibromocarbazolyle, de phénoxanine ou de phénithiazine.

8. Composés selon l'une ou plusieurs des revendications 1 à 7, **caractérisés en ce que** pour Q1 et Q2 vaut Q1 et Q2 = F, Cl, Br, CN, NO₂ ou un groupe alkyle ou alkoxyle linéaire ou ramifié ou cyclique avec 1 à 6 atomes C, un groupe CH₂ pouvant être remplacé par -NR¹-.

9. Procédé destiné à l'obtention des composés selon la revendiaction 1,
par modification des composés (III) ou (IV), 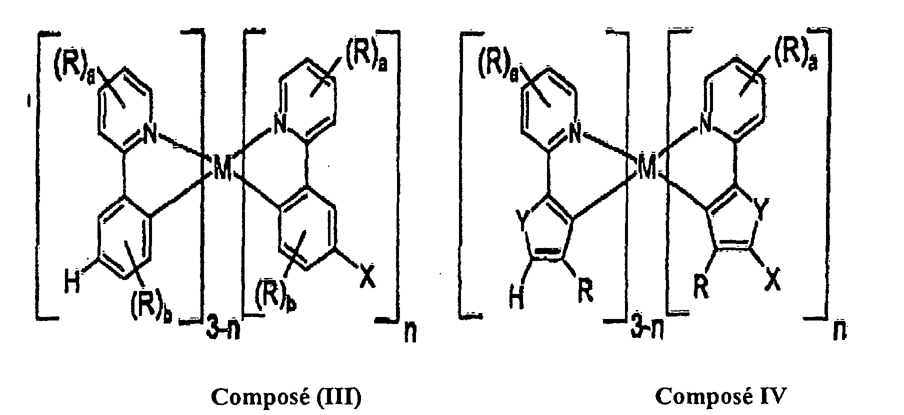 dans lesquels
X est Cl, Br ou I
avec un diarylamine secondaire de formule (I) 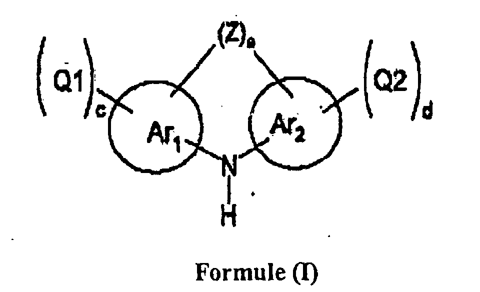 et les symboles et indices restants sont selon la revendication 1, dans un agent réactif et en présence d'un métal de transition ou d'un composé métallique de transition, d'un additif phosphoré ou azoté et d'une base.

10. Procédé selon la revendication 9, **caractérisé en ce que**
comme métal de transition ou composé métallique de transition, on utilise du nickel ou des composés de nickel, ou du palladium ou des composés de palladium.

11. Procédé selon les revendications 10 et/ou 11, **caractérisé en ce que**
le rapport molaire du nickel ou d'un composé de nickel ou du palladium ou d'un composé de palladium rapporté aux composés (III) ou (IV) est de 0,1 : 1 à 0,00001 n : 1.

12. Procédé selon l'une ou plusieurs des revendications 9 à 11, **caractérisé en ce que**
comme additif phosphoré, on utilise une phosphine.

13. Procédé selon l'une ou plusieurs des revendications 9 à 12, **caractérisé en ce que**
comme additifs azotés, on utilisedes sels d'imidazolium, des imidazol-2-ylidènes, des amines ou des acides aminés.

14. Procédé selon l'une ou plusieurs des revendications 9 à 13, **caractérisé en ce que**
le rapport molaire des additifs phosphorés ou azotés rapporté aux métaux de transition ou aux composés métalliques de transition, au nickel, à un composé de nickel, au palladium ou à un composé de palladium est de 0,5 : 1 à 1000 : 1.

15. Procédé selon l'une ou plusieurs des revendications 9 à 14, **caractérisé en ce que**
le rapport molaire de la base organique ou anorganique rapporté aux composés (III) ou (IV) est de 0,5 n : 1 à 100 n : 1.

16. Composés selon l'une des revendications 1 ou 2, **caractérisé en ce que**
leur pureté (déterminée par CLHP ou RMN 1H) est de plus de 99 %.

17. Polymères conjugués ou partiellement conjugués comprenant un ou plusieurs composés de formule (I/Ia) et/ou (II/Iia) selon les revendications 1 ou 2.

18. Polymères selon la revendication 17, **caractérisés en ce que**
le polymère est sélectionné dans le groupe des polyfluorènes, polyspirobifluprènes, polyparaphénylènes, polycarbazoles, polycarbazoles de vinyle, polythiophènes ou aussi à partir de copolymères qui possèdents plusieurs des unités citées ici.

19. Polymères selon les revendications 17 et/ou 18, **caractérisé en ce que** le polymère est soluble dans des solvants organiques.

20. Composant électronique contenant au moins un polymère selon l'une ou l'autre des revendications 17 à 19.
